# EUROPÄISCHE PATENTSCHRIFT

(11) **EP 1 545 825 B1**
(45) Veröffentlichungstag und Bekanntmachung des Hinweises auf die Patenterteilung: **18.07.2007**
(21) Anmeldenummer: 03797970.5
(22) Anmeldetag: 24.09.2003
(51) Int. Cl.: B23K 20/12, B23K 20/10, E01B 11/44, E01B 29/42

(54) **VERFAHREN ZUM METALLISCHEN VERBINDEN VON STÄBEN DURCH OSZILLIERDES EIBSCHWEISSEN**
METHOD FOR METALLICALLY CONNECTING RODS BY MEANS OF OSCILLATING FRICTION WELDING
PROCEDE D'ASSEMBLAGE METALLIQUE DE BARRES PAR SOUDAGE PAR FRICTION OSCILLANT

(30) Priorität: 30.09.2002 AT 14762002
(43) Veröffentlichungstag der Anmeldung: 29.06.2005
(73) Patentinhaber: voestalpine Schienen GmbH, 8700 Leoben (AT)
(72) Erfinder: PFEILER, Hans, A-8700 Leoben (AT)
(74) Vertreter: Wildhack, Helmut
(86) Internationale Anmeldenummer: PCT/AT2003/000281
(87) Internationale Veröffentlichungsnummer: WO 2004/028733

(56) Entgegenhaltungen:
- DE-A- 19 807 457
- DE-A- 19 938 099
- FR-A- 2 738 763
- GB-A- 1 293 531
- US-A- 3 581 969
- US-A- 3 860 468
- US-A- 5 165 589
- US-A- 5 697 545

## Beschreibung

Die Erfindung bezieht sich auf ein Verfahren zum metallischen Verbinden der Stirnflächen von Schienen, mit großer Längserstreckung durch Reibschweißen.

Zum Verbinden der Enden von Stäben können prinzipiell Schmelz-Schweißverfahren und Warmpress-Schweißverfahren und zwar Reibschweißverfahren verwendet werden. In der Fügetechnik können Reibschweißverfahren wirtschaftliche und qualitative Vorteile besitzen, von der Fachwelt wird allerdings deren Verwendung für einige Verbindungsarten, zum Beispiel einer Stimflächenverbindung von Profilstählen, als nicht zielführend erachtet.

Beim Reibschweißen von Teilen werden zwei zu verbindende Flächen aneinander gedrückt und relativ zueinander bewegt, wodurch Reibungswärme gebildet und die Teilflächen erwärmt werden. Durch die Erwärmung der reibflächennahen Bereiche erfolgt eine Plastifizierung des Werkstoffes in diesen, sodass nach einer Beendigung der Relativbewegung und einem verstärkten Auseinanderpressen der Teile eine metallische Verbindung durch Festkörperdiffusion erfolgt.

Stäbe mit großer Längserstreckung, sowie im Querschnitt profilierte Stäbe können, wenn überhaupt, nur mit außerordentlich hohem Aufwand achsial ausgerichtet mittels eines Rotationsreibschweißverfahrens hergestellt werden, wobei eine profilfluchtende Verbindung ein ungelöstes Problem darstellt.

Bei einem Verbinden der Stäbe durch ein Linearreibschweißen oder ein Orbitalreibschweißen ist es wichtig, eine genaue achsfluchtende Ausrichtung derselben im Verbindungsbereich zu erreichen. Insbesondere bei einem Reibschweißen von profilierten Stäben, wie von Schienen ist es zusätzlich von größter Bedeutung die Querschnittsflächen passgenau zu verbinden.

Aus der DE 19807457 A1, die als der nächstliegenden Stand der Technik angeschen ist, ist ein Verfahren und eine Vorrichtung zum Reibschweißen von Eisenbahnschienen und vergleichbaren, ähnlichen Trägerprofilen bekannt geworden, bei welchen ein Zwischenstück zwischen den zu verbindenden Schienenenden linear oder orbital oszillierend bewegt wird und die Schienenenden zueinander an das Zwischenstück angepresst werden, um die zum Schweißen notwendige Wärme als Reibwärme aufzubringen. Ein derartiges Reibschweißverfahren hat den Vorteil, dass eine achsiale Ausrichtung der ruhenden Schienen beim Reibschweißen verfahrensunabhängig erreicht werden kann, nachteilig hingegen ist eine Ausbildung von zwei Verbindungsflächen je Verbindungsbereich.

Sämtliche Verfahren gemäß dem Stand der Technik haben auch den Nachteil, dass ein Verbiegen der freien Enden der Stäbe, deren zu verbindende Stirnflächen aus der Parallelität bringen kann und derart eine vollflächige Reibungserwärmung und Plastifizierung des flächennahen Werkstoffes behindern.

Die Erfindung setzt sich nun zum Ziel, unter Vermeidung von Nachteilen ein Verfahren der eingangs genannten Art zu schaffen, mit welchem Schienen stirnseitig metallisch durch Reibschweißen achsfluchtend flächendeckend verbunden werden können.

Diese Aufgabe wird bei einem Reibschweißverfahren gemäβ Anspruch gelöst.

Die mit der Erfindung ereichten Vorteile sind im Wesentlichen darin zu sehen, dass die Schwingungsweite einer Schienendes auf etwa die Hälfte des verfahrensgemäß vorzusehenden Oszittahonsausmaßes vermindert wird. Die Relativgeschwindigkeit zwischen den beiden Reibflächen ist dabei im Wesentlichen doppelt so hoch wie die Geschwindigkeit der Oszillation der jeweiligen Stabenden bzw. Querschnittsflächen. Erfindungsgemäß werden dadurch die Belastung von Teilen der Reibschweißeinrichtung und der Schienenenden vermindert. Ein Vorteil der Erfindung ist darin begründet, dass an den Enden der Schienen durch deren entgegengesetzt gerichtete Verbiegung die Stirnflächen bzw. achsnormalen Querschnittsflächen im Wesentlichen parallel bleiben und daher vollflächig eine etwa gleiche spezifische Reibungswärmeentwicklung sicherstellen. Dadurch können über den gesamten Querschnitt der beiden Stirnflächen in deren flächennahem Bereich eine Werkstoffplastifizierung erreicht und hohe Verbindungsgüte erstellt werden. Die geringe Oszillationsgeschwindigkeit und die dergleichen Schwingungsweite der jeweiligen Schienen ermöglichen eine vereinfacht durchzuführende, achsfluchtende Ausrichtung der Schienen vor der erhöhten Druckbeaufschlagung der Stirnflächen zur Erstellung der metallischen Verbindung.

In einer Weiterbildung der Erfindung, in welcher die Relativbewegung zwischen den Schiene enden orbital kreisend oder elliptisch ausgeführt wird, kann der wesentliche Vorteil erreicht werden, dass die Beschleunigungen und Verzögerungen, die bei einer linear oszillierenden Bewegung der Schieneenden aufzubringen sind, vermieden werden. Weiters wird durch eine orbitale Bewegung die Energieeinbringung in die querschnittsflächennahen Zonen der Schienen gesteigert, weil relativ zueinander negative Beschleunigungen und Stillstände der beiden Reibungsflächen im Oszillationszyklus nicht auftreten.

Schieneenn bei einem Fixieren der Schienen in jeweils ruhenden Halterungen, die beiden Schieneenden zueinander in Gegenrichtung mittels Bewegungselementen gebogen und gegensinnig mit gleicher Winkelgeschwindigkeit orbital bewegen, sind hochwertige, gütesichere Reibschweißverbindungen erreichbar. Dabei ist von Vorteil, wenn die beiden Schienen jeweils mit im Wesentlichen gleichen Abstand von deren Stirn- bzw. Querschnittsflächen in den ruhenden Halterungen eingespannt werden.

Zur Vermeidung von spröden Hartbereichen in der und/oder nahe der Schweißnaht, welche Bereiche Risse aufweisen oder initiieren können, kann erfindungsgemäß vorgesehen sein, dass dem Verbindungsverfahren der Shieneenden ein Wärmebehandlungsverfahren derselben überlagert wird. Durch ein derartiges Verfahren ist es möglich, im gesamten Verbindungsbereich ein im Wesentlichen gleichartiges, von Härtespitzen freies, zähfestes Gefüge zu erstellen.

Anhand von schematischen Zeichnungen soll die Erfindung in lediglich einer Ausführungsform näher dargestellt werden.

Es zeigen:
Fig. 1 Geometrische Ausbildung eines endes Stabendes bei einer oszillierenden Reibbewegung derselben
Fig. 2 Geometrische Ausbildung der Stabenden bei deren einander entgegengerichtet oszillierenden Bewegung

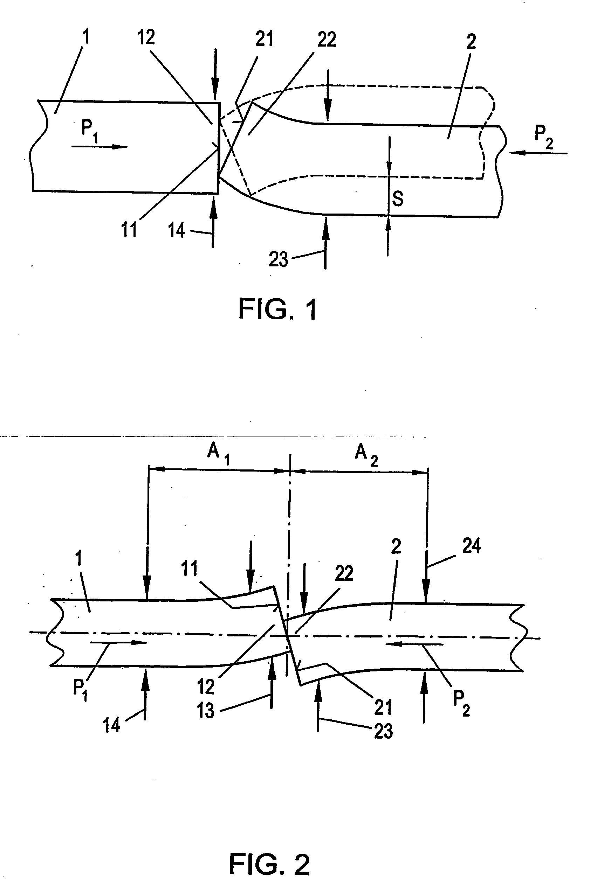

In Fig. 1 ist eine geometrische Ausbildung eines Stabendes 22 eines oszillierend bewegten Stabes 2 dargestellt. Ein Stab 1 ist an einem Ende 12 durch eine Halterung bzw. Spannmittel 14 ruhend gestellt und bietet eine statische Querschnittsreibfläche 11. Ein Stab 23, dessen Ende 22 eine oszillierende Bewegung mittels Bewegungselementen 23 mit einer Schwingungsweite S ausführt, wird mit einer dem Stab 1 entgegengerichteten Druckbeaufschlagung P₂ an diesen angestellt. Verbiegungen eines bewegten, freien Stabendes 22 führen zu einer Schrägstellung von dessen Stirnfläche 21 und einem nur bereichsweisen Anliegen an einer gegenüberliegende Stirnfläche 11, wodurch nur in diesen Bereichen Reibungswärme gebildet wird.

Ein derartiges, zum Stand der Technik zuzählendens Verfahren, wie in Fig. 1 dargestellt, hat den Nachteil eines sogenannten "Radiergummieffektes" und damit verbunden unsichere Reibschweißverbindungen.

Wenn nun, wie in Fig. 2 dargestellt ist, die Enden 12,22 zweier Stäbe 1,2 relativ zu einander entgegengerichtet durch Bewegungselemente 13,23 mit einer Schwingungsweite bis 4 mm oszilliert werden, so entsteht dabei eine elastische Verbiegung der Enden 12,22, wobei die Stirn- oder Querschnittsflächen 11,21 der Stäbe 1,2 zur Achsnormalen gleich gerichtet und im gleichen Ausmaß A₁, A₂ schräg gestellt werden, jedoch jeweils Parallelität aufweisen. Dadurch können über die Reibungsflächen 11,21 in homogener Verteilung gleichermaßen Reibungswäme in die Stirnseitenbereiche der Stäbe 1,2 eingebracht werden, wodurch höchste Güte der metallischen Verbindung erreichbar ist. Ein etwa gleicher Abstand A₁,A₂ von ruhenden Halterungen 14,24 der Stäbe zu deren Stirnflächen 11,12 fördern eine vollflächige Einbringung von Reibungswärme in die stirnflächennahe Zone der Stäbe 1,2 und somit die Qualität der Reibschweißverbindung.

## Patentansprüche

1. Verfahren zum metallischen Verbinden der Stirnflächen von Schienen (1,2), mit großer Längserstreckung durch Reibschweißen, wobei ein achsnormales Abrichten der Schienenenden und ein achsfluchtendes Ausrichten der Schienen (1,2) erfolgen, wonach die zu verbindenden Schienen (1,2) jeweils mit im Wesentilchen gleichem Abstand (A₁, A₂) von deren Abricht- bzw. Querschnittsflächen (11,21) entfernt in ruhenden Halterungen (14,24) eingespannt, deren abgerichtete Stirn- bzw. Querschnittsflächen (11,21) aneinander angestellt, druckbeaufschlagt und die beiden Schienenenden (12,22) mittels Bewegungselementen (13,23) gebogen und relativ zueinander entgegen gerichtet oszillierend bewegt werden, wobei an den Berührungsflächen Reibungswärme gebildet wird und bei Erreichen der Kriterien für eine metallische Verbindung die Schienenenden (12,22) achsial ausgerichtet, die Druckbeaufschlagung (P₁,P₂) der Querschnittsflächen (11,21) erhöht und diese vollflächig miteinander verbunden werden.

2. Verfahren nach Anspruch 1, **dadurch gekennzeichnet, dass** die Relativbewegung zwischen den Schienenenden (12,22) orbital kreisend oder elliptisch ausgeführt wird.

3. Verfahren nach Anspruch 1 oder 2, **dadurch gekennzeichnet, dass** die Enden (12,22) des beiden Schienen (1,2) gegensinnig mit gleicher Winkelgeschwindigkeit orbital bewegt werden.

4. Verfahren nach einem der Ansprüche 1 bis 3, **dadurch gekennzeichnet, dass** dem Verbindungsverfahren der Schienenenden (12,22) ein Wärmebehandlungsverfahren derselben überlagert wird.

## Claims

1. Method for metallically joining the end faces of rails (1, 2) having a considerable longitudinal extent by friction welding, wherein axially normal dressing of the rail ends and axially aligned orientation of the rails (1, 2) are carried out, after which the rails (1, 2) which are to be joined are in each case clamped in stationary holders (14, 24) at substantially the same distance (A₁, A₂) from their dressed or crass-sectional faces (11, 21), their dressed end or cross-sectional faces (11, 21) are placed against one another, pressurised and the two rail ends (12, 22) are bent by means of moving elements (13, 23) and moved in an oscillating manner relative to one another in opposite directions, wherein frictional heat is generated at the contact faces and, upon attaining the criteria for a metallic joint, the rod ends (12, 22) are axially aligned, the pressurisation (P₁, P₂) of the cross-sectional faces (11, 21) is increased and these are joined together all over.

2. Method according to Claim 1, **characterised in that** the relative movement between the rail ends (12, 22) is executed in an orbitally circulating or elliptical manner.

3. Method according to Claim 1 or 2, **characterised in that** the ends (12, 22) of the two rails (1, 2) are moved in an orbital manner in opposite directions at the same angular velocity.

4. Method according to any one of Claims 1 to 3, **characterised in that** a method for the heat treatment of the rail ends (12, 22) is superimposed on the method for joining the latter.

## Revendications

1. Procédé d'assemblage métallique des faces frontales de rails de grande longueur (1, 2) par soudage par friction, dans lequel sont prévus un dressage des extrémités de rail perpendiculairement à l'axe et un alignement axial des rails (1, 2), à la suite de quoi les rails à assembler (1, 2) sont maintenus chacun dans des supports fixes (14, 24) à une même distance (A₁, A₂) de leurs faces dressées ou sections transversales (11, 21), les faces frontales ou sections transversales dressées (11, 21) desdits rails sont placées l'une contre l'autre, mises en pression et les deux extrémités de rail (12, 22) sont cintrées et déplacées de manière oscillatoire en sens contraires l'une par rapport à l'autre au moyen d'éléments de mouvement (13, 23), générant ainsi de la chaleur de friction au niveau des surfaces de contact, les extrémité de rails (12, 22) étant alignées axialement, la pression (P₁, P₂) appliquée sur les sections transversales (11, 21) étant augmentée et lesdites sections transversales étant assemblées sur toute la surface dès lors que les critères d'assemblage métallique sont atteints.

2. Procédé selon la revendication 1, **caractérisé en ce que** les extrémités de rail (12, 22) décrivent un mouvement relatif orbital ou elliptique.

3. Procédé selon la revendication 1 ou la revendication 2, **caractérisé en ce que** les extrémités (12, 22) des deux rails (1, 2) sont déplacées selon une trajectoire orbitale, en sens contraires et à la même vitesse angulaire.

4. Procédé selon l'une quelconque des revendications 1 à 3, **caractérisé en ce qu'**un procédé de traitement thermique des extrémités de rail est superposé au traitement d'assemblage desdites extrémités de rail (12, 22).
